# FASCICULE DE BREVET EUROPEEN

(11) **EP 2 771 628 B1**
(45) Date de publication et mention de la délivrance du brevet: **12.06.2019**
(21) Numéro de dépôt: 12795489.9
(22) Date de dépôt: 24.10.2012
(51) Int. Cl.: F25B 21/00, F25B 29/00

(54) **GENERATEUR THERMIQUE MAGNETOCALORIQUE**
MAGNETOKALORISCHER WÄRMEGENERATOR
MAGNETOCALORIC HEAT GENERATOR

(30) Priorité: 28.10.2011 FR 1159839
(43) Date de publication de la demande: 03.09.2014
(73) Titulaire: Cooltech Applications S.A.S., 67810 Holtzheim (FR)
(72) Inventeur: MULLER, Christian, F-67000 Strasbourg (FR)
(74) Mandataire: Koelbel, Caroline
(86) Numéro de dépôt international: PCT/FR2012/000431
(87) Numéro de publication internationale: WO 2013/060946

(56) Documents cités:
- FR-A1- 2 904 098
- FR-A1- 2 924 489
- FR-A1- 2 937 182
- US-A1- 2010 236 258

## Description

### Domaine technique :

La présente invention concerne un générateur thermique magnétocalorique comportant au moins une unité magnétocalorique munie d'au moins un matériau magnétocalorique en contact thermique avec un fluide caloporteur et au moins une unité magnétique apte à soumettre ledit matériau magnétocalorique à un champ magnétique variable.

### Technique antérieure :

La technologie du froid magnétique à température ambiante est connue depuis plus d'une vingtaine d'années et on connaît les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un générateur thermique magnétocalorique en jouant sur les différents paramètres, tels que la puissance d'aimantation, les performances des matériaux magnétocaloriques, la surface d'échange entre le fluide caloporteur et les matériaux magnétocaloriques, la performance des échangeurs de chaleur, etc.

Concernant la puissance d'aimantation, il est important d'intégrer dans un générateur thermique magnétocalorique un dispositif permettant de générer un champ magnétique le plus intense possible. En effet, l'effet magnétocalorique d'un matériau magnétocalorique est étroitement lié à l'intensité du champ magnétique auquel on le soumet. De ce fait, plus ce champ magnétique est élevé, plus important sera l'effet magnétocalorique dudit matériau magnétocalorique, et de ce fait plus élevé sera le rendement du générateur thermique magnétocalorique.

Un autre aspect susceptible d'être amélioré dans les générateurs thermiques magnétocaloriques, et particulièrement dans les générateurs dont au moins un élément constitutif est en rotation autour d'un axe central, concerne les ponts thermiques apparaissant entre les différents éléments constitutifs et entraînant une dégradation du gradient de température entre le côté le plus chaud, dit côté chaud du générateur et son côté le plus froid, dit côté froid du générateur. Il en résulte que la performance d'un générateur thermique magnétocalorique, qui est également liée à ce gradient de température, s'en retrouve réduite.

Un autre point susceptible d'être amélioré concerne l'optimisation de la conception, de la fabrication et du montage d'un tel générateur thermique.

En outre, en plus de devoir présenter une efficacité énergétique exploitable, un générateur thermique magnétocalorique doit également présenter une taille ou un volume d'encombrement faible permettant par exemple de l'intégrer dans un appareil domestique, un véhicule, etc.

De tels exemples sont notamment décrits dans les publications US 2010/0236258, FR 2 924 489, FR 2 937 182 et FR 2 904 098 de même demandeur dans lesquels les différents éléments constitutifs des générateurs sont empilés sur un arbre commun entraîné en rotation.

### Exposé de l'invention :

La présente invention a pour but de répondre aux attentes précitées et de proposer un générateur thermique magnétocalorique présentant un coût de fabrication réduit, une efficacité thermique augmentée et une modularité facilitant son montage et autorisant une pluralité de configurations de générateurs selon les puissances thermiques recherchées ainsi qu'une évolution possible.

Dans ce but, l'invention concerne un générateur thermique magnétocalorique selon la revendication 1.

Le générateur selon l'invention peut comprendre, en outre, une unité hydraulique renfermant au moins une partie d'un circuit du fluide caloporteur en contact thermique avec ledit matériau magnétocalorique et un système d'entraînement dudit fluide caloporteur et ladite unité hydraulique peut présenter une configuration modulaire et comporter également au moins une forme d'emboîtement pour s'assembler selon ledit axe médian à une autre unité comportant une forme d'emboîtement complémentaire.

Le générateur peut comprendre, en outre, au moins une unité d'échange apte à réaliser un échange thermique entre le fluide caloporteur en contact thermique avec ledit matériau magnétocalorique et un autre fluide caloporteur, dit fluide extérieur, ladite unité d'échange présentant une configuration modulaire et comportant au moins une forme d'emboîtement pour s'assembler selon ledit axe médian à une autre unité comportant une forme d'emboîtement complémentaire.

Ladite unité d'échange peut, à cet effet, comporter au moins deux portions de circuits fluidiques, dont une première portion de circuit pour le fluide caloporteur en contact thermique avec ledit matériau magnétocalorique et une seconde portion de circuit fluidique pour ledit fluide extérieur, lesdites portions de circuit étant en contact thermique.

De manière avantageuse, lesdites formes d'emboîtement peuvent coopérer pour réaliser un positionnement axial selon l'axe médian et un positionnement radial dans le plan radial perpendiculaire à l'axe médian des unités entre elles.

En outre, certaines desdites formes d'emboîtement peuvent coopérer pour réaliser un positionnement axial selon l'axe médian, un positionnement radial dans le plan radial perpendiculaire à l'axe médian M et une liaison en rotation desdites unités entre elles.

Dans une forme de réalisation particulière, le générateur peut comporter deux unités magnétiques montées en regard l'une de l'autre pour former un entrefer magnétique dans lequel est ledit matériau magnétocalorique de ladite unité magnétocalorique, lesdites unités magnétiques peuvent comprendre chacune une pièce présentant une continuité de matière au niveau de l'axe médian, ladite matière étant apte à conduire un champ magnétique et ladite pièce supportant au moins un assemblage magnétique.

Ledit assemblage magnétique peut à cet effet comporter au moins un aimant permanent et au moins une pièce polaire.

De telles dispositions permettent avantageusement de réduire le nombre de pièces nécessaires à l'assemblage du générateur thermique, chacun desdits dispositifs comportant les moyens de positionnement lui permettant de se positionner par rapport à un ou aux dispositif(s) adjacents. Il en résulte que le générateur selon l'invention présente une configuration modulaire qui facilite son assemblage et qui lui procure également une adaptabilité accrue.

### Description sommaire des dessins :

La présente invention et ses avantages apparaîtront mieux dans la description suivante de modes de réalisation donnés à titre d'exemples non limitatifs, en référence aux dessins annexés, dans lesquels:
- la figure 1 est une représentation schématique d'un générateur thermique magnétocalorique à un étage thermique selon l'invention,
- la figure 2 est une représentation schématique d'un générateur thermique magnétocalorique à deux étages thermiques selon l'invention, et
- la figure 3 est une représentation schématique d'une variante du générateur thermique magnétocalorique représenté à la figure 1.

### Illustrations de l'invention :

Dans les exemples de réalisation illustrés, les pièces ou parties identiques portent les mêmes références numériques.

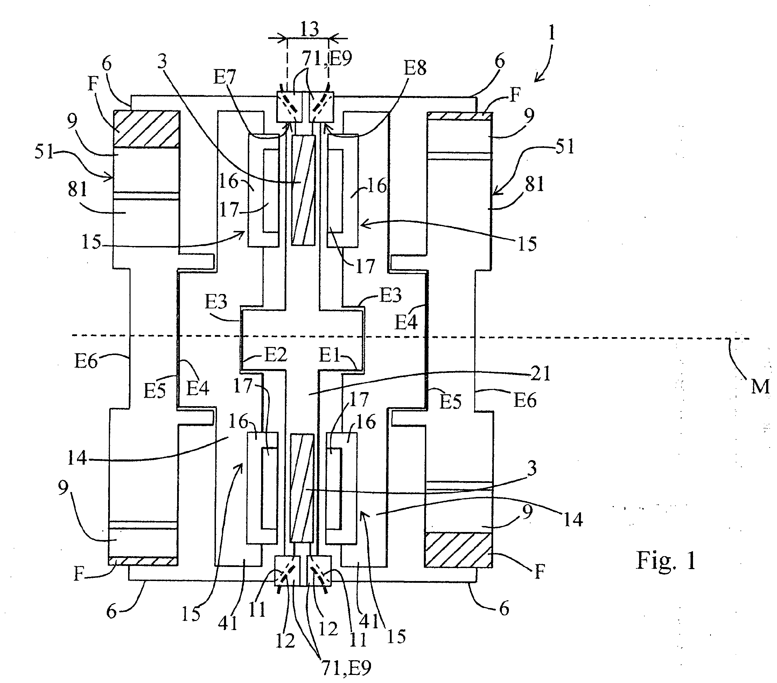

Les figures 1 à 3 des dessins annexés sont des exemples de réalisation de générateurs 1, 10, 20 thermiques magnétocaloriques selon l'invention. De tels générateurs 1, 10, 20 exploitent l'effet magnétocalorique de matériaux dits à effet magnétocalorique géant ou matériaux magnétocaloriques 3 qui ont la capacité de se refroidir et de s'échauffer instantanément sous l'effet de variations d'un champ magnétique.

Dans de tels générateurs 1, 10, 20, les matériaux magnétocaloriques 3 sont soumis à un champ magnétique variable tout en étant mis en contact thermique avec un fluide caloporteur F agencé pour collecter les frigories et les calories produites par lesdits matériaux. A cet effet, les matériaux magnétocaloriques 3 sont perméables au fluide caloporteur F et constitués par un ou plusieurs types de matériaux magnétocaloriques 3 qui comportent des passages de fluide débouchants. Ces passages de fluide peuvent être constitués par les pores d'un matériau poreux, des mini ou micro-canaux usinés dans un bloc plein ou obtenus par un assemblage de plaques de matériau(x) magnétocalorique(s) espacées les unes des autres ou rainurées, et superposées, par exemple. Dans les générateurs 1, 10, 20 illustrés dans les figures 1 à 3 annexées, les matériaux magnétocaloriques 3 sont constitués par un assemblage de plaques en matière magnétocalorique empilées et espacées les unes des autres pour permettre le passage du fluide caloporteur F. Toute autre forme de réalisation permettant au fluide caloporteur F de traverser lesdits matériaux magnétocaloriques 3 peut, bien entendu, convenir.

Dans les matériaux magnétocaloriques 3, le fluide caloporteur F circule alternativement dans la direction de l'une ou l'autre des extrémités opposées des matériaux magnétocaloriques 3, selon la valeur de champ magnétique à laquelle ils sont soumis. Le déplacement de ce fluide caloporteur F, en relation avec la variation dudit champ magnétique permet d'établir, puis de maintenir un gradient de température entre les deux extrémités opposées dites extrémité chaude et extrémité froide de chaque matériau magnétocalorique 3. Par extrémité opposée, il faut comprendre les zones d'entrée et de sortie du fluide caloporteur F dans, à travers ou le long desdits matériaux magnétocaloriques 3.

Les générateurs 1, 10, 20 représentés comportent plusieurs unités 21, 22, 41, 42, 51, 52, 71, 72 assurant des fonctions particulières du générateur 1, 10, 20 et réalisées tels des modules susceptibles d'être imbriqués les uns dans les autres par l'intermédiaire des formes d'emboîtement E1, E2, E3, E4, E5, E6, E7, E8, E9, E10, E11, E12, E13 faisant partie intégrante desdites différentes unités 21, 22, 41, 42, 51, 52, 71, 72.

Ces unités 21, 22, 41, 42, 51, 52, 71, 72 comportent plus particulièrement :
- des unités magnétocaloriques 21, 22 renfermant les matériaux magnétocaloriques 3,
- des unités hydrauliques 51, 52 comportant un moyen d'entraînement 81, 82 du fluide caloporteur F en contact thermique avec les matériaux magnétocaloriques 3 et renfermant au moins une partie du circuit hydraulique 6 du générateur thermique 1, 10, 20,
- des unités magnétiques 41, 42 destinées à assujettir lesdits matériaux magnétocaloriques 3 à des variations cycliques de champ magnétique,
- des unités d'échange 71 permettant de réaliser un échange thermique entre le fluide caloporteur F en contact thermique avec les matériaux magnétocaloriques 3 et un autre fluide caloporteur dit fluide extérieur relié à un dispositif ou une application à réfrigérer, chauffer ou tempérer, par exemple,
- et des unités de transfert 72 assurant la liaison fluidique dans le générateur 1, 10, 20, et permettant plus particulièrement de conduire le fluide caloporteur F entre les matériaux magnétocaloriques 3 et une unité hydraulique 52.

Le générateur 1 illustré à la figure 1 comporte un seul étage thermique, à savoir une seule unité magnétocalorique 21 renfermant des matériaux magnétocaloriques 3 disposés concentriquement autour de l'axe médian M. Ces matériaux magnétocaloriques 3 sont sollicités magnétiquement par deux unités magnétiques 41 identiques et disposées symétriquement de part et d'autre de l'unité magnétocalorique 21. Dans cet exemple de réalisation, chaque unité magnétique 41 comporte, centrée sur son axe médian M, une forme d'emboîtement E3 coopérant avec une forme d'emboîtement E1, E2 complémentaire de l'unité magnétocalorique 21. Dans le générateur 1 de la figure 1, les formes d'emboîtement E1, E2 de l'unité magnétocalorique 21 sont des parties en saillie, appelées aussi parties mâles, susceptibles de s'engager dans des évidements, appelés aussi parties femelles, de forme correspondante constitués par les formes d'emboîtement E3 des unités magnétiques 41. Cet assemblage par emboîtement peut être complété par un palier ou des roulements ou tout moyen équivalent autorisant un mouvement relatif entre l'unité magnétocalorique 21 et les unités magnétiques 41, à savoir dans cet exemple de réalisation, un mouvement de rotation des unités magnétiques 41 autour de l'axe médian M par rapport à l'unité magnétocalorique 21.

A cet effet, les unités magnétiques 41 comportent chacune une pièce 14 présentant une continuité de matière. Par continuité de matière, il faut comprendre que cette pièce 14 ne comporte pas d'orifice traversant destiné au montage sur un arbre ou moyeu. Sur cette pièce 14, réalisée dans cet exemple en fer, sont montés deux assemblages magnétiques 15 constitués chacun par des aimants permanents 16 et au moins une pièce polaire 17 apte à concentrer le flux magnétique produit par les aimants permanents 16. Les deux unités magnétiques 41 sont montées de telle sorte que leurs assemblages magnétiques 15. sont en regard les uns des autres pour délimiter un entrefer magnétique 13 dans lequel sont positionnés les matériaux magnétocaloriques 3 de l'unité magnétocalorique 21. Dans le générateur 1 illustré, les assemblages magnétiques 15 d'une même unité magnétique 41 sont montés symétriquement par rapport à l'axe médian M et décalés d'un angle de 180°. Ainsi, la rotation desdites unités magnétiques 41 par rapport aux matériaux magnétocaloriques 3 génère des variations de champ magnétique dans lesdits matériaux magnétocaloriques 3, les matériaux magnétocaloriques 3 présents dans un entrefer 13 subissant un champ magnétique et les matériaux magnétocaloriques 3 situés à l'extérieur d'un entrefer 13 n'étant soumis à aucun champ magnétique. Une autre configuration équivalente peut évidemment être choisie. La configuration dans laquelle chaque unité magnétique 41 comporte deux assemblages magnétiques 15 décalés d'un angle de 180° est donnée à titre d'exemple illustratif, étant entendu qu'il est possible, dans le cadre de la présente invention, de prévoir un ou plusieurs assemblages magnétiques 15 décalés selon une autre valeur d'angle, par exemple quatre assemblages magnétiques décalés selon un angle de 90°.

Le fait de ne pas monter ou empiler les différentes unités 21, 41, 51, 71 autour d'un arbre commun de centrage comme cela est le cas dans les générateurs réalisés selon l'enseignement de l'art antérieur, permet notamment de réaliser les unités magnétiques 41 dans une seule pièce pleine 14 présentant une continuité de matière favorisant ainsi la continuité du flux de champ magnétique dans le dispositif magnétique et permettant d'obtenir, par rapport à l'utilisation d'une pièce 14 identique comportant un orifice de montage sur un axe, un champ magnétique plus élevé dans l'entrefer magnétique 13. La pièce 14 est essentiellement réalisée en une matière ferromagnétique.

Les matériaux magnétocaloriques 3 sont en contact avec un fluide caloporteur F circulant dans un circuit de fluide 6 intégré au générateur 1. Ce fluide est mis en circulation par un moyen d'actionnement 81 intégré dans une unité hydraulique 51. Un tel moyen d'actionnement peut être une came 81, par exemple, dont le profil détermine la course de pistons 9 ou de moyens équivalents reliés au circuit 6 du fluide caloporteur F. La présente invention n'exclut toutefois pas toute autre forme de circulation du fluide caloporteur F. Dans cet exemple de réalisation le générateur 1 comporte deux unités hydrauliques 51 identiques, l'une étant disposée du côté chaud du générateur 1 et l'autre du côté froid. La came 81 de chaque unité hydraulique 51 est assemblée à une unité magnétique 41 par l'intermédiaire de formes d'emboîtement E4, E5 réalisant un positionnement radial et un entraînement axial autour de l'axe médian M. Ainsi, chaque unité hydraulique 51 est reliée de manière fixe en rotation à une unité magnétique 41. En d'autres termes, les unités hydrauliques 51 et magnétiques 41 constituent le rotor du générateur 1. Ce rotor peut être mis en mouvement de rotation par l'intermédiaire d'un moteur d'entraînement ou tout autre système d'entraînement équivalent couplé à au moins une des unités hydrauliques 51 au niveau d'une forme d'emboîtement E6 par une transmission telle qu'une poulie crantée associée à une courroie crantée, une chaîne associée à un pignon, un engrenage, ou toute autre transmission adéquate.

Les formes d'emboîtement E4, E5 permettant un entraînement axial des unités 41, 51 coopèrent pour réaliser un ajustement serré et une liaison mécanique simple. Dans le générateur 1 de la figure 1, les formes d'emboîtement E4, E5 des unités magnétiques 41 et hydrauliques 51 peuvent présenter une section parallélépipédique. Bien entendu, l'invention n'est pas limitée à ce type de configuration et ces formes d'emboîtement peuvent présenter toute autre section autorisant une liaison en rotation.

Le générateur thermique 1 selon l'invention a pour objet de restituer ou d'échanger l'énergie thermique qu'il a produite avec un ou plusieurs circuits ou applications extérieurs en vue d'un chauffage, d'une climatisation, d'un tempérage, etc. Ces applications extérieures peuvent être un volume d'air environnant le générateur thermique, un dispositif ou une enceinte thermique, par exemple. A cet effet, le générateur 1 comporte deux unités d'échange 71, montées à chaque extrémité de l'unité magnétocalorique 21. Chaque unité d'échange 71 comporte deux portions de circuits 11, 12 fluidiques, une portion de circuit 11 étant destinée à recevoir le fluide caloporteur F en contact thermique avec lesdits matériaux magnétocaloriques 3 et l'autre portion de circuit 12 étant destinée à recevoir un autre fluide caloporteur, dit fluide extérieur relié thermiquement au circuit ou à l'application extérieur(e). Les deux portions de circuit 11 et 12 sont en contact thermique dans l'unité d'échange 71 pour récupérer l'énergie thermique due à l'effet magnétocalorique des matériaux magnétocaloriques 3. Dans l'exemple de la figure 1, les unités d'échange 71 sont constituées d'une bague emboîtée dans des renfoncements E7, E8 de forme correspondante de l'unité magnétocalorique 21. Les unités d'échange 71 en forme de bagues constituent les formes d'emboîtement E9 complémentaires selon l'invention.

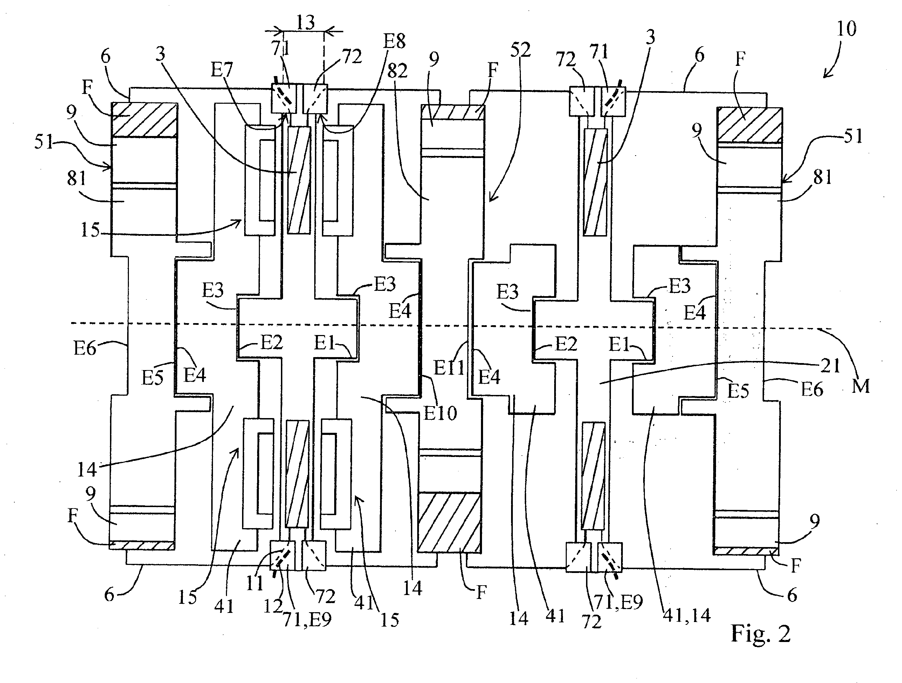

Ainsi, le générateur est composé d'unités 21, 41, 51, 71 modulaires pouvant être facilement assemblées et permettant, comme cela est notamment représenté dans la figure 2, de fabriquer, avec les mêmes unités, d'autres générateurs thermiques de puissance différente. Une telle modularité présente l'avantage de permettre un montage facilité, de réduire le nombre de pièces constitutives d'un générateur selon l'invention et donc de faciliter le référencement desdites pièces, d'augmenter leur fiabilité, de réduire le volume de stockage et donc de réduire les coûts de revient du générateur thermique 1 selon l'invention.

De plus, cette modularité permet de simplifier la maintenance et toute intervention technique car elle autorise la désolidarisation aisée de deux unités 21, 41, 51, 71 entre elles, quelle que soit leur position dans le générateur thermique. En comparaison, dans un générateur de l'art antérieur, il est nécessaire de démonter de l'arbre commun tous les organes fonctionnels positionnés devant l'organe sur lequel porte l'intervention.

En outre, les différentes unités sont assemblées entre elles de manière autoportée, par l'intermédiaire des formes d'emboîtement complémentaires E1, E2, E3, E4, E5, E6, E7, E8, E9 emboîtées entre elles par coopération de forme, sans nécessiter un arbre ou un moyeu commun. Une partie de cet assemblage par emboîtement peut être fixée sur un châssis, un support, par exemple, ou sur tout autre moyen de fixation équivalent, pour réaliser une liaison fixe des unités fixes dudit générateur.

Le générateur 1 selon l'invention ne comprend pas d'arbre central sur lequel sont montés les différents organes fonctionnels : l'arbre porteur transmettant le mouvement de rotation est remplacé par une partie structurelle de chaque unité modulaire 21, 41, 51, 71. Cela simplifie la structure et le montage du générateur 1 selon l'invention et permet de réduire son poids. En outre le recours à un arbre central dans un générateur de l'art antérieur nécessite le montage d'entretoises entre les différents organes fonctionnels, ce qui entraîne une augmentation du nombre de pièces constituant le générateur de l'art antérieur, un besoin de stockage plus important, un montage nécessitant plus d'opérations et représentant un coût de revient plus élevé.

En outre, un autre inconvénient dû à l'intégration d'un arbre commun dans les générateurs thermiques de l'art antérieur réside dans le fait qu'un arbre a une longueur donnée et ne peut de ce fait être prévu que pour un générateur en particulier. En d'autres termes, un arbre prévu pour un générateur comprenant un étage thermique sera trop court et ne pourra pas être intégré dans un générateur comportant deux étages thermiques ou ne pourra pas permettre une évolution dudit générateur. A nouveau, un tel inconvénient a un impact sur le stockage et le référencement, et donc sur le coût global. Le générateur selon l'invention, au contraire, est totalement modulaire, étant donné que les différentes unités 21, 41, 51, 71 s'emboîtent à volonté les unes dans les autres. Cela permet de réduire le nombre de pièces à fabriquer, à gérer, à stocker, à transporter, et à monter, et donc de réduire le coût de revient global dudit générateur.

Un autre avantage dû à l'absence d'un arbre commun et ce, plus particulièrement dans un générateur thermique magnétocalorique comportant plusieurs étages de matériaux magnétocaloriques, est la suppression des ponts thermiques dus à la présence de cet arbre et donc à l'augmentation du rendement du générateur thermique magnétocalorique. En effet, dans les générateurs connus de l'art antérieur, l'arbre est en contact thermique et physique avec les organes du générateur et réalise un pont thermique entre eux. Par exemple pour un générateur comportant deux étages thermiques, dont le premier étage comporte le côté froid du générateur et le deuxième étage comporte le côté chaud du générateur, l'arbre commun sur lequel sont montés les deux étages réalise un transfert ou échange d'énergie thermique entre les deux étages, pénalise le gradient de température entre les extrémités chaude et froide, et réduit de ce fait la puissance thermique du générateur. L'absence d'un tel arbre commun dans le générateur 1 selon l'invention permet de supprimer ce pont thermique et d'augmenter l'efficacité du générateur. A cet effet, il est avantageux de réaliser toutes ou certaines des unités 21, 22, 41, 42, 51, 52, 71, 72 dans un ou des matériaux thermiquement non conducteurs.

La figure 2 représente à cet effet un générateur 10 à deux étages thermiques selon l'invention. Le générateur 10 selon l'invention est essentiellement constitué par les mêmes unités que celles utilisées pour le montage du générateur 1 à un étage représenté à la figure 1. Les seules unités nouvelles ou susceptibles d'être différentes sont une nouvelle unité hydraulique centrale 52 munie d'une came 82 et montée entre les deux unités thermiques 21 et deux nouvelles unités de transfert 72 de fluide remplaçant chacune une unité d'échange 71 et assurant chacune la circulation du fluide caloporteur F entre les deux unités magnétocaloriques 21 et l'unité hydraulique centrale 52. En comparaison, un générateur à deux étages thermiques de l'art antérieur intégrerait, en plus, un nouvel arbre commun dont la longueur est adaptée à sa configuration et de nouvelles entretoises montées entre les organes supplémentaires. En outre, une intervention au coeur d'un tel générateur de l'art antérieur nécessiterait le démontage complet dudit générateur.

En ce qui concerne l'unité hydraulique centrale 52, elle se distingue des unités hydrauliques 51 disposées aux extrémités du générateur 10 essentiellement par la distribution hydraulique qu'elle intègre du fait qu'elle est reliée à deux unités magnétocaloriques 21. Les formes d'emboîtement E10 et E11 sont quant à elles respectivement identiques aux formes d'emboîtement E5 et E6 pour conserver la modularité du générateur 2 selon l'invention.

Ce générateur thermique 10 présente les mêmes avantages que ceux décrits en regard du générateur 1 représenté à la figure 1.

Ainsi, l'invention propose un générateur thermique 1, 10, avec une conception modulaire autorisant un montage dont l'exécution est aisée et dont le nombre d'unités constitutives est limité, et permettant une pluralité de configurations possibles de générateurs en fonction des puissances thermiques recherchées.

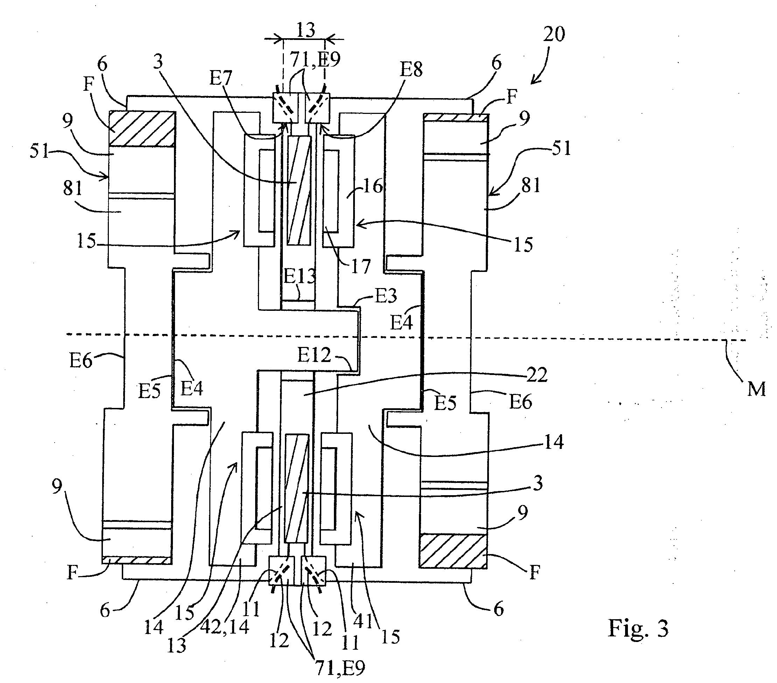

La figure 3 représente une variante de réalisation du générateur 1 selon l'invention présentant les mêmes avantages que ceux décrits en regard du générateur 1 de la figure 1. Dans le générateur 20 de la figure 3, les unités magnétiques 41, 42 sont montées en regard l'une de l'autre pour former un entrefer magnétique 13 et comportent des formes d'emboîtement complémentaires E3, E12 coopérant l'une avec l'autre. L'une 42 des unités magnétiques comprend à cet effet une partie en saillie E12 destinée à s'engager dans une forme d'emboîtement E3 correspondante telle qu'un évidement de l'autre unité magnétique 41 pour réaliser un ajustement serré. Cette autre unité magnétique 41 correspond avantageusement à la même pièce que celle utilisée pour les générateurs 1 et 10 représentés dans les figures 1 et 2. De préférence, la partie en saillie E12 présente une section telle qu'elle lie en rotation les deux unités magnétiques 41, 42. Une section quadrangulaire ou ovoïdale est un exemple d'une telle forme envisageable. Toutefois, il peut également être envisagé de réaliser cette partie en saillie E12 avec une section circulaire et d'intégrer un moyen de positionnement angulaire entre les deux unités magnétiques 41, 42, tel qu'une goupille, tige filetée, une clavette, un crantage, par exemple.

Dans cette variante de réalisation, l'unité magnétocalorique 22 est formée d'un anneau délimitant un alésage, centré sur l'axe médian M et constituant une forme d'emboîtement E13, montée sur la partie en saillie E12 de l'unité magnétique 41 correspondante par une liaison pivot. Cette liaison pivot peut être réalisée par des roulements, par exemple. Bien entendu, tout autre moyen équivalent autorisant un guidage rotation d'un dispositif par rapport à l'autre, tel qu'un palier peut être utilisé.

La réalisation des unités E1, E2, E3, E4, E5, E6, E7, E8, E9, E10, E11, E12, E13, fonctionnelles du générateur sous la forme de modules susceptibles d'être assemblés les uns aux autres par l'intermédiaire de formes d'emboîtement 21, 22, 41, 42, 51, 52, 71, 72 qui font partie intégrante desdites unités, sans avoir recours à un arbre ou moyeu commun traversant lesdites unités permet de proposer un générateur thermique magnétocalorique 1, 10, 20 dont la conception est optimisée, qui présente un coût de fabrication réduit, une efficacité thermique augmentée et qui est susceptible de présenter des configurations différentes selon la puissance recherchée. Ainsi, ces unités peuvent être montées les unes par rapport aux autres par l'intermédiaire des formes d'emboîtement qu'elles comportent, sans nécessité de les monter et fixer sur un moyen traversant tel qu'un arbre ou moyeu.

### Possibilités d'application industrielle :

Il ressort clairement de cette description que l'invention permet d'atteindre les buts fixés, à savoir proposer un générateur thermique magnétocalorique présentant une optimisation de son rendement ainsi qu'une fabrication et un coût de revient réduits grâce à une configuration modulaire de ses éléments constitutifs.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur thermique magnétocalorique (1, 10, 20) comportant au moins une unité magnétocalorique (21, 22) munie d'au moins un matériau magnétocalorique (3) en contact thermique avec un fluide caloporteur (F) et au moins une unité magnétique (41, 42) apte à soumettre ledit matériau magnétocalorique (3) à un champ magnétique variable, générateur **caractérisé en ce que** lesdites unités (21, 22, 41, 42) présentent une configuration modulaire et comportent des formes d'emboîtement complémentaires (E1, E2, E3, E12, E13) agencées pour s'emboîter entre-elles par coopération de forme selon un même axe médian (M) pour assembler lesdites unités (21, 22, 41, 42) entre-elles de manière autoportée, sans arbre commun.

2. Générateur, selon la revendication 1, **caractérisé en ce qu'**il comprend, en outre, une unité hydraulique (51, 52) renfermant au moins une partie d'un circuit (6) du fluide caloporteur (F) en contact thermique avec ledit matériau magnétocalorique (3) et un système d'entraînement (81, 82) dudit fluide caloporteur (F), et **en ce que** ladite unité hydraulique (51, 52) présente une configuration modulaire et comporte également au moins une forme d'emboîtement (E5, E6, E10, E11) pour s'assembler selon ledit axe médian (M) à une autre unité (21, 22, 41, 42,) comportant une forme d'emboîtement complémentaire (E4).

3. Générateur, selon l'une quelconque des revendications précédentes, **caractérisé en ce qu'**il comprend, en outre, au moins une unité d'échange (71) apte à réaliser un échange thermique entre le fluide caloporteur (F) en contact thermique avec ledit matériau magnétocalorique (3) et un autre fluide caloporteur, dit fluide extérieur, et **en ce que** ladite unité d'échange (71) présente une configuration modulaire et comporte au moins une forme d'emboîtement (E9) pour s'assembler selon ledit axe médian (M) à une autre unité (21, 22) comportant une forme d'emboîtement complémentaire (E7, E8).

4. Générateur, selon la revendication 3, **caractérisé en ce que** ladite unité d'échange (71) comporte au moins deux portions de circuits (11, 12) fluidiques, dont une première portion de circuit (11) pour le fluide caloporteur (F) en contact thermique avec ledit matériau magnétocalorique (3) et une seconde portion de circuit fluidique (12) pour ledit fluide extérieur, lesdites portions de circuit (11, 12) étant en contact thermique.

5. Générateur, selon l'une quelconque des revendications précédentes, **caractérisé en ce que** lesdites formes d'emboîtement complémentaires (E1, E3; E2, E3; E4, E5; E4, E10; E4, E11; E7, E9; E8, E9; E12, E3) coopèrent pour réaliser un positionnement axial selon l'axe médian (M) et un positionnement radial dans le plan radial perpendiculaire à l'axe médian (M) desdites unités (21, 22, 41, 42, 51, 52, 71) entre elles.

6. Générateur, selon l'une quelconque des revendications précédentes, **caractérisé en ce que** lesdites formes d'emboîtement (E5, E4; E10, E4; E11, E4; E12, E3) coopèrent pour réaliser un positionnement axial selon l'axe médian (M), un positionnement radial dans le plan radial perpendiculaire à l'axe médian M et une liaison en rotation desdites unités (41, 51; 41, 52; 42, 51) entre elles.

7. Générateur, selon l'une quelconque des revendications précédentes, **caractérisé en ce qu'**il comporte deux unités magnétiques (41, 42) montées en regard l'une de l'autre pour former un entrefer (13) magnétique dans lequel est ledit matériau magnétocalorique (3) de ladite unité magnétocalorique (21, 22), **en ce que** lesdites unités magnétiques (41, 42) comprennent chacune une pièce (14) présentant une continuité de matière au niveau de l'axe médian (M), ladite matière étant apte à conduire un champ magnétique et **en ce que** ladite pièce (14) supporte au moins un assemblage magnétique (15).

8. Générateur, selon la revendication 7, **caractérisé en ce que** ledit assemblage magnétique (15) comporte au moins un aimant permanent (16) et au moins une pièce polaire (17).

## Patentansprüche

1. Magnetokalorischer Wärmegenerator (1, 10, 20) mit zumindest einer magnetokalorischen Einheit (21, 22) mit zumindest einem mit einem Wärmeübertragungsfluid (F) in thermischem Kontakt stehenden magnetokalorischen Material (3) und zumindest einer magnetischen Einheit (41, 42), die besagtes magnetokalorisches Material (3) einem variablen Magnetfeld aussetzen kann, **dadurch gekennzeichnete**r Generator, dass besagte Einheiten (21, 22, 41, 42) eine modulare Konfiguration aufweisen und komplementäre Einfügeformen (E1, E2, E3, E12, E13) betragen, die ausgelegt sind, um durch Formschluß gemäß einer selben Mittelachse (M) ineinander zu passen, um besagte Einheiten (21, 22, 41, 42) auf selbsttragende Weise, ohne gemeinsame Welle, zusammen zu bauen.

2. Generator nach Anspruch 1, **dadurch gekennzeichnet, dass** er zudem eine hydraulische Einheit (51, 52) beträgt, die zumindest ein Teil eines Kreislaufs (6) für das mit besagtem magnetokalorischen Material (3) in thermischem Kontakt stehende Wärmeübertragungsfluid (F) enthält, sowie ein Antriebssystem (81, 82) für besagtes Wärmeübertragungsfluid (F), und dadurch, dass besagte hydraulische Einheit (51, 52) eine modulare Konfiguration aufweist und ebenfalls zumindest eine Einfügeform (E5, E6, E10, E11) beträgt, um gemäß besagter Mittelachse (M) an eine andere Einheit (21, 22, 41, 42,) mit einer komplementären Einfügeform (E4) angebaut zu werden.

3. Generator nach einem beliebigen der vorhergehenden Ansprüche, **dadurch gekennzeichnet, dass** er zudem zumindest eine Austauscheinheit (71) beträgt, die einen Wärmeaustausch zwischen dem mit besagtem magnetokalorischen Material (3) in thermischem Kontakt stehenden Wärmeübertragungsfluid (F) und einem anderen, als externes Fluid bezeichnetes Wärmeübertragungsfluid ausführen kann, und dadurch, dass besagte Austauscheinheit (71) eine modulare Konfiguration aufweist und zumindest eine Einfügeform (E9) beträgt, um gemäß besagter Mittelachse (M) an eine andere Einheit (21, 22) mit einer komplementären Einfügeform (E7, E8) angebaut zu werden.

4. Generator nach Anspruch 3, **dadurch gekennzeichnet, dass** besagte Austauscheinheit (71) zumindest zwei Fluidkreislauf-Abschnitte (11, 12) beträgt, wovon ein erster Kreislauf-Abschnitt (11) für das mit besagtem magnetokalorischen Material (3) in thermischem Kontakt stehende Wärmeübertragungsfluid (F) und ein zweiter Fluidkreislauf-Abschnitt (12) für besagtes externes Fluid, wobei besagte Kreislauf-Abschnitte (11, 12) in thermischem Kontakt zueinander stehen.

5. Generator nach einem beliebigen der vorhergehenden Ansprüche, **dadurch gekennzeichnet, dass** besagte komplementäre Einfügeformen (E1, E3; E2, E3; E4, E5; E4, E10; E4, E11; E7, E9; E8, E9; E12, E3) zusammenarbeiten, um eine axiale Positionierung gemäß Mittelachse (M) und eine radiale Positionierung in der radialen Ebene senkrecht zu Mittelachse (M) von besagten Einheiten (21, 22, 41, 42, 51, 52, 71) untereinander zu ergeben.

6. Generator nach einem beliebigen der vorhergehenden Ansprüche, **dadurch gekennzeichnet, dass** besagte komplementäre Einfügeformen (E5, E4; E10, E4; E11, E4; E12, E3) zusammenarbeiten, um eine axiale Positionierung gemäß Mittelachse (M), eine radiale Positionierung in der radialen Ebene senkrecht zu Mittelachse (M) und eine Drehverbindung von besagten Einheiten (41, 51; 41, 52; 42, 51) untereinander zu ergeben.

7. Generator nach einem beliebigen der vorhergehenden Ansprüche, **dadurch gekennzeichnet, dass** er zwei magnetische Einheiten (41, 42) beträgt, die sich gegenüber liegen, um einen magnetischen Luftspalt (13) zu bilden, in dem sich besagtes magnetokalorisches Material (3) von besagter magnetokalorischen Einheit (21, 22) befindet, dadurch, dass besagte magnetische Einheiten (41, 42) jeweils ein Teil (14) betragen, das auf Mittelachse (M) eine Stoffschlüssigkeit aufweist, wobei besagter Stoff ein Magnetfeld leiten kann, und dadurch, dass besagtes Teil (14) zumindest eine magnetische Baugruppe (15) trägt.

8. Generator nach Anspruch 7, **dadurch gekennzeichnet, dass** besagte magnetische Baugruppe (15) zumindest einen Permanentmagnet (16) und zumindest ein Polstück (17) beträgt.

## Claims

1. Magnetocaloric heat generator (1, 10, 20) comprising at least one magnetocaloric unit (21, 22) provided with at least one magnetocaloric material (3) in thermal contact with a heat transfer fluid (F) and at least one magnetic unit (41, 42) capable of subjecting said magnetocaloric material (3) to a variable magnetic field, generator **characterized in that** said units (21, 22, 41, 42) have a modular configuration and comprise complementary fitting forms (E1, E2, E3, E12, E13) arranged to fit together by cooperation of forms along a same median axis (M) in order to assemble said units (21, 22, 41, 42) together in a self-supported way, without common shaft.

2. Generator according to claim 1, **characterized in that** it furthermore comprises a hydraulic unit (51, 52) including at least a section of a circuit (6) for the heat transfer fluid (F) in thermal contact with said magnetocaloric material (3) and a driving system (81, 82) for said heat transfer fluid (F), and **in that** said hydraulic unit (51, 52) has a modular configuration and also comprise at least one fitting form (E5, E6, E10, E11) in order to be assembled, along said median axis (M), to another unit (21, 22, 41, 42,) provided with a complementary fitting form (E4).

3. Generator according to any of the previous claims, **characterized in that** it furthermore comprises at least one exchange unit (71) capable of carrying out a heat exchange between the heat transfer fluid (F) in thermal contact with said magnetocaloric material (3) and another heat transfer fluid called external fluid, and **in that** said exchange unit (71) has a modular configuration and comprises at least one fitting form (E9) in order to be assembled, along said median axis (M), to another unit (21, 22) provided with a complementary fitting form (E7, E8).

4. Generator according to claim 3, **characterized in that** said exchange unit (71) comprises at least two portions of fluidic circuits (11, 12), a first circuit portion (11) for the heat transfer fluid (F) in thermal contact with said magnetocaloric material (3) and a second fluidic circuit portion (12) for said external fluid, said circuit portions (11, 12) being in thermal contact.

5. Generator according to any of the previous claims, **characterized in that** said complementary fitting forms (E1, E3; E2, E3; E4, E5; E4, E10; E4, E11; E7, E9; E8, E9; E12, E3) cooperate to perform an axial positioning along the median axis (M) and a radial positioning in the radial plane perpendicular to the median axis (M) of said units (21, 22, 41, 42, 51, 52, 71) with respect to each other.

6. Generator according to any of the previous claims, **characterized in that** said fitting forms (E5, E4; E10, E4; E11, E4; E12, E3) cooperate to perform an axial positioning along the median axis (M), a radial positioning in the radial plane perpendicular to the median axis (M) and a rotational connection of said units (41, 51; 41, 52; 42, 51) with respect to each other.

7. Generator according to any of the previous claims, **characterized in that** it comprises two magnetic units (41, 42) mounted opposite to each other in order to form a magnetic gap (13) wherein said magnetocaloric material (3) of said magnetocaloric unit (21, 22) is located, **in that** said magnetic units (41, 42) comprise each a part (14) with a material continuity at the level of the median axis (M), said material being capable of conducing a magnetic field and **in that** said part (14) carries at least one magnetic assembly (15).

8. Generator according claim 7, **characterized in that** said magnetic assembly (15) comprises at least one permanent magnet (16) and at least one pole piece (17).
